# EUROPÄISCHE PATENTSCHRIFT

(11) **EP 1 695 057 B1**
(45) Veröffentlichungstag und Bekanntmachung des Hinweises auf die Patenterteilung: **09.03.2011**
(21) Anmeldenummer: 04804071.1
(22) Anmeldetag: 20.12.2004
(51) Int. Cl.: G01L 19/00, B29C 45/77

(54) **VERFAHREN ZUM BETREIBEN EINER ARBEITSGERÄTSCHAFT**
METHOD FOR OPERATING A TOOL SHAFT
PROCEDE D'EXPLOITATION D'UN ARBRE D'OUTIL

(30) Priorität: 18.12.2003 DE 10359975
(43) Veröffentlichungstag der Anmeldung: 30.08.2006
(73) Patentinhaber: Priamus System Technologies AG, 8200 Schaffhausen (CH)
(72) Erfinder: BADER, Christopherus, CH-8413 Neftenbach (CH)
(74) Vertreter: Weiss, Peter
(86) Internationale Anmeldenummer: PCT/EP2004/014471
(87) Internationale Veröffentlichungsnummer: WO 2005/059495

(56) Entgegenhaltungen:
- DE-A1- 10 117 000
- DE-U1- 8 907 620
- US-A- 5 427 516

## Beschreibung

Die Erfindung betrifft ein Verfahren zum Betreiben einer Arbeitsgerätschaft mit Hilfe eines Sensorelementes eines Sensors, insbesondere eines Spritzgiesswerkzeuges, bei welcher die Kavität zumindest ein Sensor beispielsweise zum Ermitteln eines Werkzeuginnendruckes zugeordnet und das Sensorelement in eine Hülse mit Spiel eingesetzt wird.

### STAND DER TECHNIK

Aus dem Stand der Technik sind Sensoren für beliebig viele technische Anwendungsgebiete bekannt. Sie werden dort zum Messen physikalischer Grössen eingesetzt. Die gemessenen physikalischen Grössen können beispielsweise. Eingangsparameter für eine Steuerung sein, die insbesondere einen Herstellungsprozess begleitet und steuert So können beispielsweise die physikalischen Eigenschaften eines zu produzierenden Elementes während der Produktion überwacht und, wenn notwendig, entsprechende Parameter geändert werden. Dazu können die Sensoren in Kontakt mit dem zu produzierenden Element oder dem das Element bildenden Werkstoff stehen. Um Messverfälschungen zu vermeiden, sollten die Sensoren nur die zu bestimmenden Grössen aufnehmen.

Aus der Vielzahl der Anwendungsgebiete sei hier beispielhaft die Überwachung des Werkzeuginnendruckes in Spritzgiesswerkzeugen angeführt. Durch die Ermittlung des Werkzeuginnendrucks kann u.a. der Zeitpunkt der Umschaltung von Fülldruck auf Nachdruck bestimmt werden.

Aus der DE 101 17 000 A1 ist ein Verfahren zum automatischen Erkennen der Empfindlichkeit von Sensoren bekannt. Die Empfindlichkeit der Sensoren wird ermittelt und mittels eines Widerstandes einer bestimmten Sensorgruppe mit einem vorbestimmten Empfindtichkeitsbereich zugeordnet. Dieser Empfindlichkeitsbereich ist, einmal eingestellt, nicht mehr änderbar. Wird der Sensor jedoch in eine Bohrung eingebaut, kann es je nach Qualität dieser Bohrung dazu führen, dass der Sensor die Innenwand der Bohrung berührt. Durch diesen Effekt des Kraftnebenschlusses kann der Sensor an Empfindlichkeit verlieren, was eine umständliche Neukalibrierung der Messanlage nötig macht.

Ähnliches ist auch aus der US-A-5,427,516 bekannt. Auch dort besteht der fertige Sensor aus einer Hülse, in welcher ein Sensorkopf angeordnet ist, wobei der Sensorkopf zur Hülse einen Spielraum einhält. Dieser Sensor wird dann in die Wand eines Spritzgusswerkzeuges eingesetzt und danach kalibriert.

### AUFGABE

Aufgabe der vorliegenden Erfindung ist es, den Effekt des Kraftnebenschlusses zu verhindern, um eine eingestellte Empfindlichkeit des Sensors auch in Bohrungen minderer Güte zu erhalten.

### LÖSUNG DER AUFGABE

Zur Lösung der Aufgabe führt, dass der Sensor danach kalibriert, d. h. seine Empfindlichkeit bestimmt wird, sodann nach Bestimmung der Empfindlichkeit ein entsprechend codierbares Bauelement, beispielsweise ein

Widerstand ausgewählt, in den Sensor eingebaut und der Sensor erst anschliessend mit der Hülse in eine Bohrung einer Werkzeugwand eingesetzt wird.

Dieses erfindungsgemässe Verfahren hat den grossen Vorteil, dass es nicht zu dem Effekt des Kraftnebenschlusses kommt, bei dem das Sensorelement die Werkzeuginnenwand berührt und dadurch im wesentlichen seine Empfindlichkeit beeinträchtigt wird oder gänzlich verliert. Auf die Qualität der Bohrung in der Werkzeugwand braucht jetzt keine Rücksicht mehr genommen zu werden. Wichtig allein ist die Qualität der Bohrung in der Hülse. Es ist aber leichter und billiger eine qualitativ hochwertige Bohrung in der Hülse herzustellen, als eine solche in der Werkzeugwand. Die Herstellung von qualitativ hochwertigen Bohrungen kann im übrigen dem Hersteller dieser Sensorhülsen überlassen werden.

Ein Spiel schliesst an dieser Stelle auch Führungen des Sensorelementes ein, die das Sensorelement gegenüber der Innenwand der Hülse reibungsfrei oder nahezu reibungsfrei auf beispielsweise Gleithilfen und/oder Rollen an bestimmten Stellen führen. Es muss durch die Art der Verbindung mit dem Sensorelement aber sichergestellt sein, dass ein Kraftnebenschluss nicht stattfinden kann, etwa durch eine elastische Aufhängung der Gleithilfen gegenüber dem Sensorelement Solche Einrichtungen könnten beispielsweise bei langen Sensorelementen als Unterstützung vorteilhaft sein.

Durch die Anordnung einer Hülse in der Bohrung, in der das Sensorelement mit Spiel geführt ist, wird das Sensorelement gegen die Innenwand der Bohrung abgeschirmt. Dadurch spielt die Qualität der Bohrung selbst keine Rolle, lediglich die Qualität der Hülse ist entscheidend, um das Spiel festzulegen. Durch eine hohe Qualität der Hülse kann so vom Hersteller des Sensors die Empfindlichkeit des Sensors bei Einhaltung bestimmter Grenzwerte von beispielsweise Temperatur oder Druck beim und nach Einbau desselben gewährleistet werden.

Ist das Sensorelement mit leichtem Spiel in der Hülse angeordnet, kann es sich in einer Vorzugsrichtung frei bewegen. Das Spiel des Sensorelementes ist dabei so zu wählen, dass zum einen die freie Beweglichkeit gewährleistet ist und zum andern ein eventueller Eintritt eines Mediums zwischen Sensorelement und Hülse minimiert wird.

Das für die Hülse zu verwendende Material muss dabei insbesondere den statischen Erfordernissen genügen, was von einer Vielzahl von Materialien erfüllt werden kann. Es kommen beispielsweise Metalle, Kunststoffe, Keramiken oder ähnliches in Betracht. Es sei an dieser Stelle erwähnt, dass eine Bohrung eine mögliche Form einer Ausnehmung ist. Es kommen auch sämtliche anderen Formen einer Ausnehmung mit beispielsweise einer dreieckigen, viereckigen oder auch beliebigen Querschnittsform in Betracht. Auch die Form der Hülse spielt nur insoweit eine Rolle, als sie in die Ausnehmung einführbar sein muss und das Sensorelement gegen Kraftnebenschluss gegenüber der Innenwand der Bohrung geschützt ist.

Ein weiterer Vorteil der Führung in der Hülse ist, dass die zu messende Grösse auf die dafür vorgesehene Stelle kanalisiert werden kann. So kann beispielsweise das Sensorelement in einer Hülse derart angeordnet werden, dass ein Druck nur von einer bestimmten Richtung auf das Sensorelement wirkt. Auf diese Weise sind Messverfälschungen verhinderbar und/oder reduzierbar.

Vorzugsweise ist die Hülse auf einen Grundkörper des Sensors aufgesetzt, von dem auch das Sensorelement abragt. Auf diese Weise ist eine sehr stabile Anordnung erzielbar, bei welcher der Sensor konstruktiv einfach und kostengünstig in der Schutzvorrichtung angeordnet werden kann. Damit liegt die Empfindlichkeit und der Empfindlichkeitsbereich des Sensors vor seinem Einbau fest und der Sensor muss nicht nach seinem Einbau in diesen Parametern festgelegt werden.

Durch eine feste Verbindung von Hülse und Grundkörper wird die stabile Anordnung der gesamten Vorrichtung verstärkt. Besonders einfach ist eine Verbindung durch Verschweissen oder Verkleben. Ist eine wiederlösbare Verbindung gewünscht, kann der Sensor auch in der Hülse verschraubt werden.

In einer bevorzugten Ausgestaltung weist das Sensorelement eine Ringnut zur Aufnahme einer Dichtung auf. Die Dichtung verhindert ein Eindringen des Mediums zwischen Hülse und Sensorelement, was das Spiel zwischen Hülse und Sensorelement verringern könnte oder das Sensorelement gegenüber der Hülse unbeweglich machen würde.

### FIGURENBESCHREIBUNG

Weitere Vorteile, Merkmale und Einzelheiten der Erfindung ergeben sich aus der nachfolgenden Beschreibung eins bevorzugten Ausführungsbeispiels sowie anhand der Zeichnung; diese zeigt in
- Figur 1: eine schematisierte Darstellung eines Sensors, der in einer Werkzeugwand eines Spritzgiesswerkzeuges angeordnet ist; in einem Teilschnitt;
- Figur 2: einen vergrössert dargestellten Längsschnitt durch den Sensor aus Figur 1.

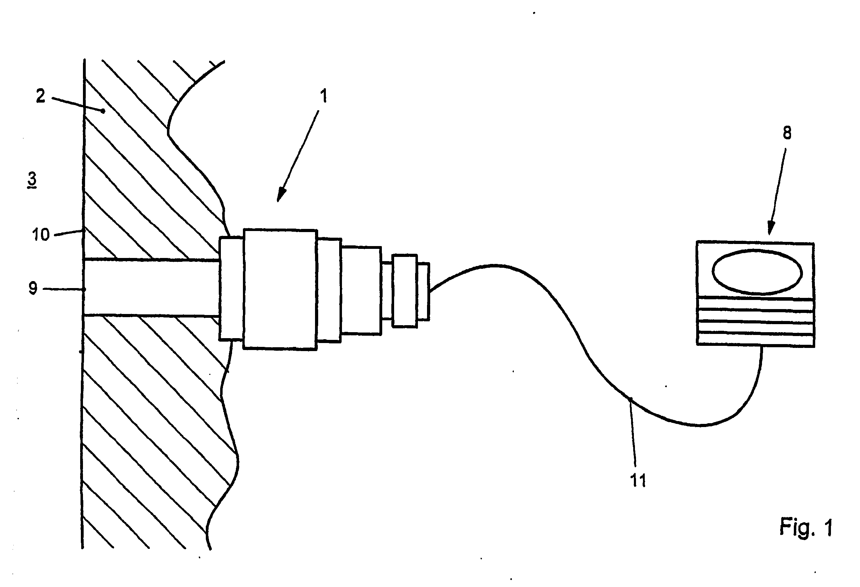

Figur 1 zeigt einen Sensor 1, der in einer Bohrung einer Wand 2 einer Kavität 3 eines Spritzgiesswerkzeuges angeordnet ist. Mittels des Sensors 1 wird z.B. der Werkzeuginnendruck in der Kavität 3 gemessen. Dabei ist eine Stirnwand 9 des Sensors 1 in der Ebene einer Innenfläche 10 der Wand 2 angeordnet, so dass er dem Einfluss einer in die Kavität 3 eindringenden Schmelze ausgesetzt ist.

Die gemessene Grösse, z.B. der Werkzeuginnendruck, kann durch den Sensor 1 insbesondere in eine elektrisches Signal umgewandet und über ein Kabel 11 an eine Auswerteeinheit 8 weitergegeben werden, die den gesamten Arbeitsvorgang überwachen und steuern kann. So kann durch diese Anordnung insbesondere der Zeitpunkt von Fülldruck auf Nachdruck bestimmt werden. An dieser Stelle sei angemerkt, dass die gemessene Grösse auch schnurlos übertragen werden kann. Auch eine andere als eine elektrische Übertragung beispielsweise eine optische ist vorstellbar.

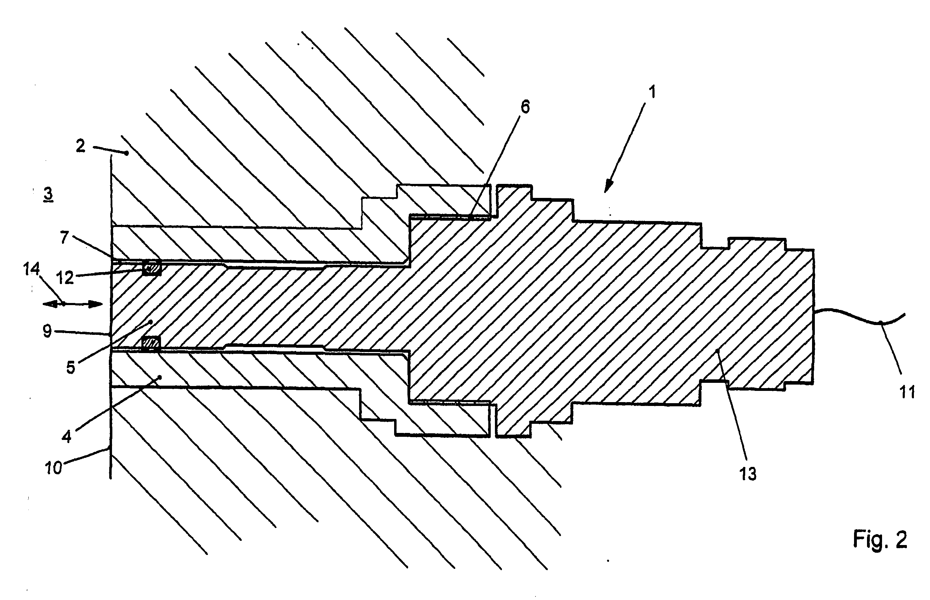

Der Sensor 1 umfasst gemäss Figur 2 einen Grundkörper 13, ein Sensorelement 5 und eine Hülse 4. Die Hülse 4 ist mit dem Grundkörper 13 in einer Weise verschraubt, dass das Sensorelement 5 radial von der Hülse 4 umschlossen ist. Das Sensorelement 5 ist auf seiner der Stirnwand 9 entgegengesetzten Seite mit dem Grundkörper 13 verbunden.

Das Sensorelement 5 ist mit leichtem Spiel 7 in der Hülse 4 angeordnet. Dadurch wird ein Kraftnebenschluss zwischen Wand 2 bzw. Hülse 4 und dem Sensorelement 5 vermieden. Solch ein Kraftnebenschluss kann beispielsweise durch die Qualität der Bohrung und/oder durch verschiedene Wärmeausdehnungen von Wand 2 und Sensorelement 5 zustande kommen. Durch den Einsatz der geeigneten Hülse 4 können beide Effekte unterbunden werden.

Durch das Spiel 7 kann sich das Sensorelement 5 in einer Richtung gemäss eines Doppelpfeils 14 bewegen, um den zu messenden Werkzeuginnendruck ohne Reibungsverluste durch eine Berührung mit der Hülse 4 aufzunehmen.

Eine in einer Ringnut angeordnete Dichtung 12 sorgt dafür, dass, falls Schmelze aus der Kavität 3 in das Innere der Hülse 4 gelangt, ein weiteres Vordringen in Richtung des Grundkörpers 13 vermieden wird.

Die Funktionsweise der vorliegenden Erfindung ist folgende:
Vor dem Einbau des Sensors 1 in die Bohrung der Wand 2 eines Spritzgiesswerkzeuges wird die Hülse 4 auf den Grundkörper 13 aufgesetzt, so dass das Sensorelement 5 in der Hülse 4 mit Spiel 7 geführt ist. Bereits jetzt wird der Sensor 1 kalibriert, d. h., es wird seine Empfindlichkeit bestimmt. Aufgrund der Bestimmung der Empfindlichkeit wird ein entsprechender Widerstand ausgewählt, wie dies in der DE 101 17 000 A1 beschrieben ist. Dieser Widerstand wird in den Sensor 1 eingebaut. Danach erfolgt ein Einbau des Sensors 1 in die Bohrung der Wand 2.

### Positionszahlenliste

| | | | | | |
|---|---|---|---|---|---|
| 1 | Sensor | 34 | | 67 | |
| 2 | Wand | 35 | | 68 | |
| 3 | Kavität | 36 | | 69 | |
| 4 | Hülse | 37 | | 70 | |
| 5 | Sensorelement | 38 | | 71 | |
| 6 | Gewinde | 39 | | 72 | |
| 7 | Spiel | 40 | | 73 | |
| 8 | Auswerteeinheit | 41 | | 74 | |
| 9 | Stirnwand | 42 | | 75 | |
| 10 | Innenwand | 43 | | 76 | |
| 11 | Kabel | 44 | | 77 | |
| 12 | Dichtung | 45 | | 78 | |
| 13 | Grundkörper | 46 | | 79 | |
| 14 | Doppelpfeil | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Betreiben einer Arbeitsgerätschaft mit Hilfe eines Sensorelementes eines Sensors (1), insbesondere eines Spritzgiesswerkzeuges, bei welchem einer Kavität (3) zumindest ein Sensor (1), beispielsweise zum Ermitteln eines Werkzeuginnendruckes zugeordnet und das Sensorelement (5) in eine Hülse (4) mit Spiel (7) eingesetzt wird,
**dadurch gekennzeichnet,**
**dass** der Sensor (1) danach kalibriert, d. h. seine Empfindlichkeit bestimmt wird, sodann nach Bestimmung der Empfindlichkeit ein entsprechend codierbares Bauelement, beispielsweise ein Widerstand ausgewählt, in den Sensor (1) erst anschliessend eingebaut und der Sensor (1) mit der Hülse (4) in eine Bohrung einer Werkzeugwand (2) eingesetzt wird.

2. Verfahren nach Anspruch 1, **dadurch gekennzeichnet, dass** in der Hülse (4) eine qualitativ hochwertige Bohrung zur Aufnahme des Sensorelementes (5) mit Spiel (7) eingeformt wird.

## Claims

1. A method of operating a working tool with the aid of a sensor element of a sensor (1), in particular an injection moulding tool, in which at least one sensor (1) is associated with a cavity (3), for example to ascertain a tool internal pressure, and the sensor element (5) is inserted with play (7) into a sleeve (4), **characterised in that** the sensor (1) is subsequently calibrated, i.e. its sensitivity is determined, then, after determination of the sensitivity, an appropriately codeable component, for example a resistor, is selected, is only then mounted in the sensor (1) and the sensor (1) together with the sleeve (4) is inserted into a bore in a tool wall (2).

2. A method according to claim 1, **characterised in that** a high-quality bore for receiving the sensor element (5) with play (7) is formed in the sleeve (4).

## Revendications

1. Procédé d'exploitation d'un arbre d'outil à l'aide d'un élément d'un capteur (1), en particulier un moule de moulage par injection, dans lequel est associé à une cavité (3) au moins un capteur (1), par exemple pour déterminer une pression intérieure de moule et l'élément de capteur (5) est placé avec un jeu (7) dans une douille (4),
**caractérisé par le fait**
**que** le capteur (1) est ensuite étalonné, c'est-à-dire que sa sensibilité est déterminée, puis, après détermination de la sensibilité, il est choisi un composant pouvant être codé en conséquence, par exemple une résistance, uniquement ensuite incorporé dans le capteur (1), et le capteur (1) est placé avec la douille (4) dans un alésage d'une paroi de moule (2).

2. Procédé selon la revendication 1, **caractérisé par le fait qu'**il est formé dans la douille (4) un alésage de haute qualité pour recevoir l'élément de capteur (5) avec un jeu (7).
